(19)

Europäisches
Patentamt
European
Patent Office
Office européen
des brevets

(11) **EP 4 228 113 A1**

(12) **EUROPEAN PATENT APPLICATION**
published in accordance with Art. 153(4) EPC

(43) Date of publication:
**16.08.2023 Bulletin 2023/33**

(21) Application number: **21890643.6**

(22) Date of filing: **05.07.2021**

(51) International Patent Classification (IPC):
***H02J 1/10*** ***(2006.01)***

(52) Cooperative Patent Classification (CPC):
Y02E 60/50

(86) International application number:
**PCT/CN2021/104419**

(87) International publication number:
**WO 2022/100112 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2020 CN 202011270368**

(71) Applicant: **Zhuzhou National Innovation Railway
Technology
Co., Ltd.
Zhuzhou, Hunan 412000 (CN)**

(72) Inventors:
• **LI, Lin**
**Zhuzhou, Hunan 412000 (CN)**
• **SUN, Shuangcheng**
**Zhuzhou, Hunan 412000 (CN)**
• **LI, Xiaoman**
**Zhuzhou, Hunan 412000 (CN)**

• **HUANG, Zhihua**
**Zhuzhou, Hunan 412000 (CN)**
• **SHENG, Zhenyu**
**Zhuzhou, Hunan 412000 (CN)**
• **XIAO, Liya**
**Zhuzhou, Hunan 412000 (CN)**
• **LI, Yaqi**
**Zhuzhou, Hunan 412000 (CN)**
• **ZHAO, Kai**
**Zhuzhou, Hunan 412000 (CN)**
• **FANG, Xin**
**Zhuzhou, Hunan 412000 (CN)**
• **JIANG, Dafa**
**Zhuzhou, Hunan 412000 (CN)**
• **JIANG, Zhiqiang**
**Zhuzhou, Hunan 412000 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **POWER DISTRIBUTION METHOD AND SYSTEM FOR PARALLEL FUEL CELL POWER
SYSTEM**

(57) A power allocation method and system for parallel fuel cell power system are provided, which includes the following steps: step (1) obtaining an optimal power value of each single-stack fuel cell system at maximum efficiency; and step (2) during power allocation, starting the single-stack fuel cell systems stage by stage until total output power of the single-stack fuel cell systems meets load power, wherein actual output power of each single-stack fuel cell system is the corresponding optimal power value. Thus, the whole system is in the optimal operating state, the power allocation method is high in anti-interference capacity, easy to implement and low in cost.

Obtain an optimal power value of each single-stack fuel cell system at maximum efficiency

During power allocation, start the single-stack fuel cell systems stage by stage until total output power of the single-stack fuel cell systems meets load power, wherein actual output power of each single-stack fuel cell system is the corresponding optimal power value

FIG. 1

EP 4 228 113 A1

# Description

## Cross-Reference of Related Application

The application is based on and claims priority to Chinese Patent Application No. 202011270368.1, entitled "Power Allocation Method and System for Parallel Fuel Cell Power System", filed on November 13, 2020, which is incorporated herein by reference in its entirety, as one part of the application.

## Field of the Disclosure

The disclosure mainly relates to the technical field of fuel cells, and particularly relates to a power allocation method and system for a parallel fuel cell power system.

## Background of the Disclosure

Fuel cells are an efficient and environmentally-friendly novel power generation device widely used in different fields. In low-power application scenarios, a single fuel cell system can meet the power demand, control is easy, and the reliability is high. However, in high-power application scenarios such as tramcars and heavy ships, the output power of a single fuel cell cannot meet the overall load power demand, and with the increase of the level of output power, the configuration of the whole fuel cell power system will become complex, so the overall reliability of the system cannot be guaranteed in case of a fault. In view of this, multiple fuel cells are connected in parallel to realize a high-power output to meet the load power demand. How to realize power allocation of multiple fuel cells has become the key to a parallel fuel cell control system.

At present, an equal allocation strategy and a stage-by-stage allocation strategy are mainly used for power allocation of parallel fuel cell systems. The equal allocation strategy is generally used for equally allocating power required by a load to a fixed number of fuel cell modules to ensure that power outputs of the fuel cell modules are identical. The stage-by-stage allocation strategy is generally used for realizing a maximum power output of one fuel cell; and when the power output of this fuel cell cannot meet the power demand, the next stage of fuel cell will be started until the power demand is met. These two methods have obvious defects in low-power intervals and may cause the waste of fuel.

## Summary of the Disclosure

The technical issue to be settled by the disclosure is to solve the technical problems of the prior art by providing a power allocation method and system for a parallel fuel cell power system, which can guarantee the optimal overall system efficiency.

To solve the above problems, the disclosure provides a power allocation method for a parallel fuel cell power system, including:

Step (1) obtaining an optimal power value of each single-stack fuel cell system at maximum efficiency; and

Step (2) during power allocation, starting the single-stack fuel cell systems stage by stage until total output power of the single-stack fuel cell systems meets load power, where actual output power of each single-stack fuel cell system is the corresponding optimal power value.

As a further improvement to the above technical solution:

In Step (1), the optimal power value of each single-stack fuel cell system at the maximum efficiency is searched out through an adaptive perturbation and observation method.

An actual change curve of the efficiency of the single-stack fuel cell system with output power is drawn based on actual test data of the single-stack fuel cell system, and efficiency-power functional fitting is realized through a least square method to obtain a fitting function;

a power value selected in the vicinity of a maximum efficiency value of the function is used as initial data of the adaptive perturbation and observation method; in the initial phase of the adaptive perturbation and observation method, the variation of the efficiency is used to form a perturbation signal to generate a variable-step perturbation.

A PI controller is used to realize proportional-integral amplification of an error between efficiency values corresponding to adjacent power points to generate an adaptive perturbation power value, and finally, a power instruction of the single-stack fuel cell system is generated based on the adaptive perturbation and observation principle to obtain a corresponding reference current instruction;

an actual output current of the single-stack fuel cell system follows the reference current instruction, and a duty cycle d required by a DC-DC converter is generated according to an error between the output current reference value and an actual value of the single-stack fuel cell system, to control actual output power of the single-stack fuel cell system.

In Step (2), if the total output power of the single-stack fuel cell systems does not meet the load power, the lower power is equally allocated to the single-stack fuel cell systems.

The single-stack fuel cell systems are connected in parallel and are independently and directly connected to a DC bus of a power system.

A fitting formula of the least square method is:

$$f(p) = a * e^{(b*p)} + c * e^{(d*p)}$$

where, f(p) is the fitting function of the efficiency-power curve of the single-stack fuel cell system, and a, b, c and d are fitting parameters.

The disclosure further provides a power allocation method for a parallel fuel cell power system, including:

a first module used for obtaining an optimal power value of each single-stack fuel cell system at maximum efficiency; and

a second module used for starting the single-stack fuel cell systems stage by stage until total output power of the single-stack fuel cell systems meets load power during power allocation, where actual output power of each single-stack fuel cell system is the corresponding optimal power value.

The disclosure further provides a computer-readable storage medium, having a computer program stored therein, and when the computer program is executed by a processor, the steps of the power allocation method for a parallel fuel cell power system are performed.

The disclosure further provides a computer device, including a memory having a computer program stored therein, and a processor, and when the computer program is executed by the processor, the steps of the power allocation method for a parallel fuel cell power system are performed.

Compared with the prior art, the disclosure has the following advantages:

According to the disclosure, the output power value of a multi-stack fuel cell power system at the optimal efficiency (i.e. maximum efficiency) is searched out according to the power required by a load, with the comprehensive efficiency of the whole power system as the objective, and stage-by-stage power allocation of fuel cell stacks is realized based on the power value, thus ensuring that the whole system is in the optimal operating state.

According to the disclosure, when the adaptive perturbation and observation method is used to search for the optimal efficiency point of the single-stack fuel cell systems, the power value in the vicinity of the optimal efficiency point of the fitting function is selected to improve the search efficiency, such that a response to the power required by the load can be given in time; the perturbation step can be adjusted automatically according to the change of the factor such as the load power or the air intake of the fuel cells, so the power allocation method is high in anti-interference capacity, easy to implement and low in cost; and the core algorithm of the power allocation method is high in universality and is independent of any preset constants.

Brief Description of the Drawings

FIG. 1 is a flow diagram of one embodiment of a method provided by the disclosure.

FIG. 2 is a topological diagram of a multi-stack fuel cell power system according to the disclosure.

FIG. 3 illustrates a change curve of the efficiency of a single-stack fuel cell system with load power according to the disclosure.

FIG. 4 is a control block diagram of an adaptive perturbation and observation method according to the disclosure.

Detailed Description of the Disclosure

The disclosure will be further described below in conjunction with the accompanying drawings and specific embodiments.

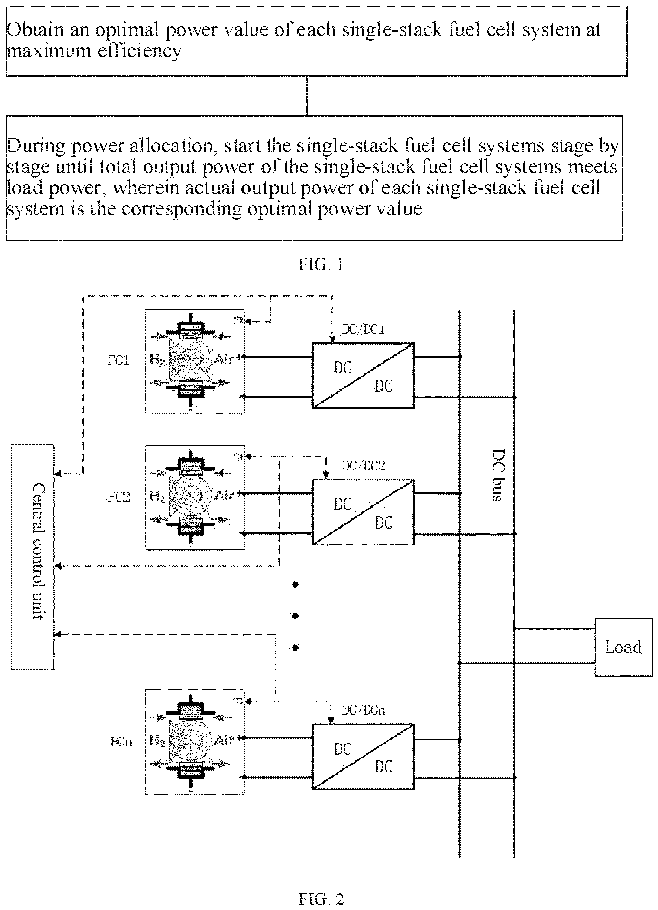

As shown in FIG. 1, this embodiment provides a power allocation method for a parallel fuel cell power system, which includes the following steps:

(1) Obtaining an optimal power value of each single-stack fuel cell system at maximum efficiency; and

(2) During power allocation, starting the single-stack fuel cell systems stage by stage until total output power of the single-stack fuel cell systems meets load power, wherein actual output power of each single-stack fuel cell system is the corresponding optimal power value.

According to the disclosure, the output power value of a multi-stack fuel cell power system at the optimal efficiency (i.e. maximum efficiency) is searched out according to the power required by a load, with the comprehensive efficiency of the whole power system as the objective, and stage-by-stage power allocation of fuel cell stacks is realized based on the power value, thus ensuring that the whole system is in the optimal operating state.

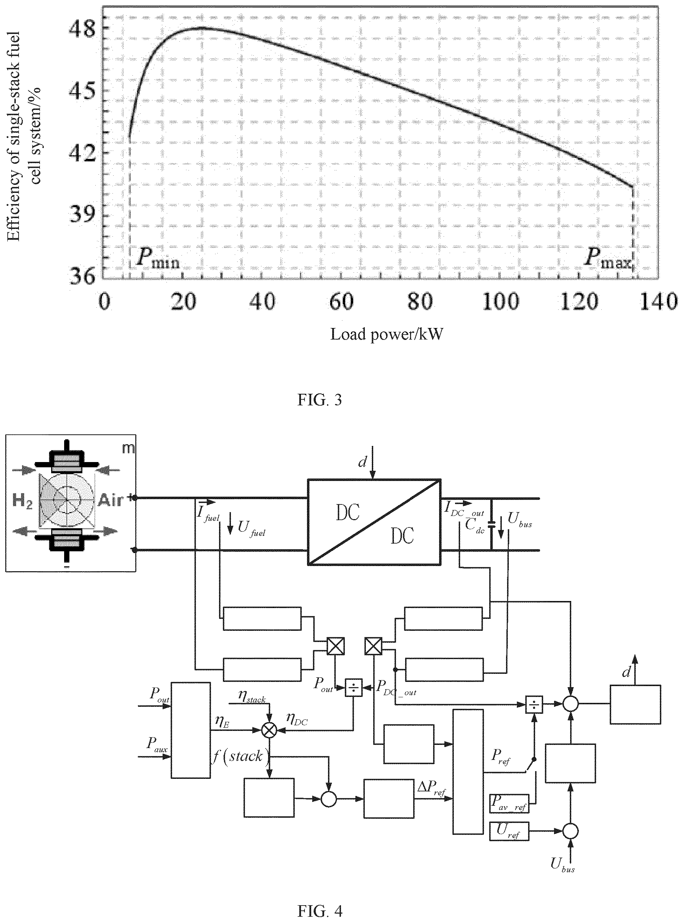

As shown in FIG. 4, the multi-stack fuel cell power system includes multiple single-stack fuel cell systems, a central control unit, a DC bus and a high-power load, wherein the multiple single-stack fuel cell systems are connected in parallel to the DC bus and transmit power to the load through the DC bus. Under the condition that the voltage of the DC bus remains unchanged, the total current output by the DC bus is increased to improve the power level of the whole power system. Wherein, each single-stack fuel cell system is composed of a fuel cell and a unidirectional DC-DC booster converter, wherein the fuel cell and the unidirectional DC-DC booster converter are connected to the DC bus in a cascaded manner, and output power of the fuel cell is independently controlled by controlling the duty cycle of the unidirectional DC-DC booster converter.

In a specific embodiment, as shown in FIG. 4, in Step (1), the optimal power value of each single-stack fuel cell system at the maximum efficiency is searched out through an adaptive perturbation and observation method. As shown in FIG. 3, with the increase of the load power, the efficiency of the single-stack fuel cell system increases first and then decreases, which indicates that the single-stack fuel cell system has flexible output characteristics, low stability and durability, low system efficiency, limited output power, and the like. Wherein, the efficiency of the single-stack fuel cell system is calculated by the following formula:

$$f(stack_n) = \eta_{stack_n} \times \eta_E \times \eta_{DC}$$

Where, $f(stack_n)$ is the output efficiency of an $n^{th}$ fuel cell system; $\eta_{stack_n}$ is the conversion efficiency of an $n^{th}$ fuel cell stack; $\eta_E$ is the electrical efficiency under the condition that an auxiliary system is taken into account; $\eta_{DC}$ is the electrical efficiency obtained after conversion by the DC-DC booster converter;

The electrical efficiency $\eta_E$ is calculated by the following formula:

$$\eta_E = \frac{P_{outn} - P_{aux}}{P_{outn}} \times 100\%$$

Where, $P_{outn}$ is the output power of the $n^{th}$ fuel cell stack, and $P_{aux}$ is the auxiliary power required by the whole fuel cell power system.

Specifically, the maximum efficiency point of each fuel cell stack is searched out through the adaptive perturbation and observation method to allocate power stage by stage to realize power summation of the power system, and an equation of the overall efficiency of the multi-stack fuel cell power system, a constraint of the power required by the load and a constraint of the power of each fuel cell stack is established as follows:

$$\begin{cases} f(all) = \dfrac{P_1 + P_2 + \cdots P_n}{\dfrac{P_1}{f(P_1)} + \dfrac{P_2}{f(P_2)} + \cdots + \dfrac{P_n}{f(P_n)}} \\ s.t.\, P_1 + P_2 + \cdots P_n = P_{load} \\ P_{nmin} \leq P_n \leq P_{nmax} \end{cases}$$

Where, f(all) is the efficiency of the whole fuel cell power system, P1, P2, ..., and Pn are the output power of the fuel cell stacks respectively, $f(P_1)$, $f(P_2)$, ..., and $f(P_n)$ are the efficiency corresponding to real-time power of the fuel cell stacks, and $P_{load}$ is the power required by the load; $P_{nmin}$ and $P_{nmax}$ are the minimum actual output power and the maximum actual output power of the $n^{th}$ fuel cell stack respectively.

Further, in the adaptive perturbation and observation method, an actual change curve of the efficiency of each single-stack fuel cell system with output power is drawn based on actual test data of the single-stack fuel cell system, and efficiency-power functional fitting is realized through a least square method, the fitting formula of which is as follows:

$$f(p) = a * e^{(b*p)} + c * e^{(d*p)}$$

Where, f(p) is a fitting function of the efficiency-power curve of the single-stack fuel cell system, and a, b, c and d are fitting parameters;

A power value selected in the vicinity of a maximum efficiency value of the function is used as initial data of the adaptive perturbation and observation method; in the initial phase of the adaptive perturbation and observation method, an initial perturbation value is large due to the difference between a selected initial power point and a power point at the optimal efficiency; in the process that the initial power point continuously approaches the optimal efficiency point, the perturbation value decreases constantly, so the variation of the efficiency is used to form a perturbation signal to generate a variable-step perturbation;

The perturbation value should be controlled as small as possible during stable operation, so a PI controller is used to realize proportional-integral amplification of an error $\Delta\eta$ between efficiency values corresponding to adjacent power points to generate an adaptive perturbation power value $\Delta p$, and finally, a power instruction $P_{out}^*$ of the single-stack fuel cell system is generated based on the adaptive perturbation and observation principle; an actual output current instruction of the single-stack fuel cell system is obtained by:

$$I_{DC\_out}^* = \frac{P_{out}^*}{U_{bus}}$$

, where $U_{bus}$ is the voltage of the bus.

The actual output current of the single-stack fuel cell system should follow a reference current instruction, which can be realized through an inner-loop current controller, and the duty cycle d required by the DC-DC booster converter is generated according to an error between the output current reference value and the actual output current value of the fuel cell system, to control the actual output power of the fuel cells.

In the disclosure, the initial value of the output power of the single-stack fuel cell systems is selected according to the fitting function of the efficiency-power curve, and the adaptive perturbation and observation method is used to search for the optimal efficiency point, the PI controller is used to realize proportional-integral amplification of the error between efficiency values corresponding to adjacent power points, then the output power instruction $P_{out}^*$ of the single-stack fuel cell systems is generated based on the adaptive perturbation and observation principle, and the duty cycle d required by the DC-DC booster converter is generated by the inner-loop current PI controller, such that the output power of the single-stack fuel cell systems is controlled.

When the adaptive perturbation and observation method is used to search for the optimal efficiency point of the single-stack fuel cell systems, the power value in the vicinity of the optimal efficiency point of the fitting function is selected to improve the search efficiency, such that a response to the power required by the load can be given in time; the perturbation step can be adjusted automatically according to the change of the factor such as the load power or the air intake of the fuel cells, so the power allocation method is high in anti-interference capacity, easy to implement and low in cost; and the core algorithm of the power allocation method is high in universality and is independent of any preset constants.

As shown in FIG. 2, the power allocation method will be described with four fuel cell stack sub-systems as an example: with the increase of the power required by the load, the optimal efficiency point $\eta_1$ of the first sub-system is searched out through the adaptive perturbation and observation method, and whether the output power of the first sub-system meet the load power is determined; if not, the second sub-system is started, and the optimal efficiency point $\eta_2$ of the second sub-system is searched out; by analogy, power is allocated to stage by stage until it reaches the last sub-system; if the power required by the load is lower than power corresponding to the optimal efficiency point, power is output according to the power actually required by the load; if the sum of the output power corresponding to the optimal efficiency point of the whole system does not reach the power required by the load, the power required by the load is equally allocated to all fuel cell stacks through an equal allocation method.

The disclosure further discloses a power allocation system for a parallel fuel cell power system, which includes:

A first module used for obtaining an optimal power value of each single-stack fuel cell system at maximum efficiency; and

A second module used for starting the single-stack fuel cell systems stage by stage until total output power of the single-stack fuel cell systems meets load power during power allocation, wherein actual output power of each single-stack fuel cell system is the corresponding optimal power value.

The power allocation system is used for implementing the power allocation method and has the advantages of the power allocation method.

The disclosure further discloses a computer-readable storage medium having a computer program stored therein, and when the computer program is executed by a processor, the steps of the power allocation method for a parallel fuel cell power system are performed. The disclosure further discloses a computer device, which includes a memory and a processor, wherein a computer program is stored in the memory, and when the computer program is executed by the processor, the steps of the power allocation method for a parallel fuel cell power system are performed. All or part of the process of the method in the above embodiment of the disclosure can be completed by corresponding hardware instructed by a computer program, which is stored in a computer-readable storage medium, and when the computer program is executed by a processor, the steps of the method in the above embodiments are performed. Wherein, the computer program includes computer program codes, which may be in the form of source codes, object codes or executable files, or be in some intermediate forms. The computer-readable medium may include: any entity or device capable of carrying computer program codes, recording medium, USB flash disk, mobile hard disk drive, diskette, CD, computer memory, read-only memory (ROM), random access memory (RAM), electric carrier signal, telecommunication signal, and software distribution medium. All or part of the process of the method in the above embodiment of the disclosure may be completed by corresponding hardware instructed by a computer program, which is stored in a computer-readable storage medium, and when the computer program is executed by a processor, the steps of the method in the above embodiments are performed. Wherein, the computer program includes computer program codes, which may be in the form of source codes, object codes or executable files, or be in some intermediate forms. The computer-readable medium may include: any entity or device capable of carrying computer program codes, recording medium, USB flash disk, mobile hard disk drive, diskette, CD, computer memory, read-only memory (ROM), random access memory (RAM), electric carrier signal, telecommunication signal, and software distribution medium.

The above embodiments are merely preferred ones of the disclosure, and the protection scope of the disclosure is not limited to the above embodiments. All technical solutions based on the concept of the disclosure should fall within the protection scope of the disclosure. It should be pointed out that those ordinarily skilled in the art can make some improvements and embellishments without departing from the principle of the disclosure, and all these improvements and embellishments should fall within the protection scope of the disclosure.

## Claims

1. A power allocation method for a parallel fuel cell power system, comprising:

   (1) obtaining an optimal power value of each single-stack fuel cell system at maximum efficiency; and
   (2) during power allocation, starting the single-stack fuel cell systems stage by stage until total output power of the single-stack fuel cell systems meets load power, wherein actual output power of each single-stack fuel cell system is the corresponding optimal power value.

2. The power allocation method for a parallel fuel cell power system according to Claim 1, wherein in Step (1), the optimal power value of each single-stack fuel cell system at the maximum efficiency is searched out through an adaptive perturbation and observation method.

3. The power allocation method for a parallel fuel cell power system according to Claim 2, wherein an actual change curve of the efficiency of the single-stack fuel cell system with output power is drawn based on actual test data of the single-stack fuel cell system, and efficiency-power functional fitting is realized through a least square method to obtain a fitting function;
   a power value selected in the vicinity of a maximum efficiency value of the function is used as initial data of the adaptive perturbation and observation method; in the initial phase of the adaptive perturbation and observation method, the variation of the efficiency is used to form a perturbation signal to generate a variable-step perturbation.

4. The power allocation method for a parallel fuel cell power system according to Claim 3, wherein a PI controller is used to realize proportional-integral amplification of an error between efficiency values corresponding to adjacent power points to generate an adaptive perturbation power value, and finally, a power instruction of the single-stack fuel cell system is generated based on the adaptive perturbation and observation principle to obtain a corresponding reference current instruction;
   an actual output current of the single-stack fuel cell system follows the reference current instruction, and a duty cycle d required by a DC-DC converter is generated according to an error between the output current reference value and an actual value of the single-stack fuel cell system, to control actual output power of the single-stack fuel cell system.

5. The power allocation method for a parallel fuel cell power system according to any one of Claims 1-4, wherein in Step (2), if the total output power of the single-stack fuel cell systems does not meet the load power, the lower power is equally allocated to the single-stack fuel cell systems.

6. The power allocation method for a parallel fuel cell power system according to any one of Claims 1-4, wherein the single-stack fuel cell systems are connected in parallel and are independently and directly connected to a DC bus of a power system.

7. The power allocation method for a parallel fuel cell power system according to Claim 3 or 4, wherein a fitting formula of the least square method is:

$$f(p) = a * e^{(b*p)} + c * e^{(d*p)}$$

where, f(p) is the fitting function of the efficiency-power curve of the single-stack fuel cell system, and a, b, c and d are fitting parameters.

8. A power allocation method for a parallel fuel cell power system, comprising:

   a first module used for obtaining an optimal power value of each single-stack fuel cell system at maximum efficiency; and
   a second module used for starting the single-stack fuel cell systems stage by stage until total output power of the single-stack fuel cell systems meets load power during power allocation, wherein actual output power of each single-stack fuel cell system is the corresponding optimal power value.

9. A computer-readable storage medium, having a computer program stored therein, wherein when the computer program is executed by a processor, the steps of the power allocation method for a parallel fuel cell power system according to any one of Claims 1-7 are performed.

10. A computer device, comprising a memory having a computer program stored therein, and a processor, wherein when the computer program is executed by the processor, the steps of the power allocation method for a parallel fuel cell power system according to any one of Claims 1-7 are performed.

Obtain an optimal power value of each single-stack fuel cell system at maximum efficiency

During power allocation, start the single-stack fuel cell systems stage by stage until total output power of the single-stack fuel cell systems meets load power, wherein actual output power of each single-stack fuel cell system is the corresponding optimal power value

FIG. 1

FIG. 2

FIG. 3

FIG. 4

## INTERNATIONAL SEARCH REPORT

| International application No. |
| --- |
| **PCT/CN2021/104419** |

**A. CLASSIFICATION OF SUBJECT MATTER**

H02J 1/10(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 并联, 燃料, 电池, 最大, 效率, 跟踪, 功率, 扰动, 观察, 自适应, parallel, fuel, cell, battery, maximum, efficiency, track, power, disturb, observe, adaptive

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112366678 A (HUZHOU GUOCHUANG TRACK TECHNOLOGY CO., LTD.) 12 February 2021 (2021-02-12) description, paragraphs 1-60, and figures 1-4 | 1-10 |
| X | Cheol-soon Kwon et al. "Maximum Efficiency Point Tracking Algorithm for Photovoltaic Power Generating System" *2010 Second Pacific-Asia Conference on Circuits, Communications and System,* 02 November 2010 (2010-11-02), ISSN: 4244-7969, page 71 left-hand column - page 74 right-hand column | 1, 5, 8-10 |
| Y | Cheol-soon Kwon et al. "Maximum Efficiency Point Tracking Algorithm for Photovoltaic Power Generating System" *2010 Second Pacific-Asia Conference on Circuits, Communications and System,* 02 November 2010 (2010-11-02), ISSN: 4244-7969, page 71 left-hand column - page 74 right-hand column | 2-4, 6-7 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2021** | **22 September 2021** |

| Name and mailing address of the ISA/CN | Authorized officer |
| --- | --- |
| **China National Intellectual Property Administration (ISA/CN) No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/104419** |

**C. DOCUMENTS CONSIDERED TO BE RELEVANT**

| Category* | Citation of document, with indication, where appropriate, of the relevant passages | Relevant to claim No. |
|---|---|---|
| Y | 王天宏 等 (WANG, Tianhong et al.). "燃料电池系统在线辨识和实时最大效率滑模控制方法 (Fuel Cell System Online Identification and Real-time Maximum Efficiency Sliding Mode Control Method)" 中国电机工程学报 (Proceedings of the CSEE), Vol. 39, No. 17, 05 September 2019 (2019-09-05), ISSN: 0258-8013, page 5120 left-hand column - page 5124 right-hand column, figure 4 | 2-4, 7 |
| Y | 朱亚男 等 (ZHU, Yanan et al.). "基于功率自适应分配的多堆燃料电池系统效率协调优化控制 (Efficiency Coordination and Optimization Control Method of Multi-stack Fuel Cell Systems Based on Power Adaptive Allocation)" 中国电机工程学报 (Proceedings of the CSEE), Vol. 39, No. 6, 20 March 2019 (2019-03-20), ISSN: 0258-8013, page 1715 left-hand column - page 1721 left-hand column, figures 1-10 | 3, 4, 6, 7 |
| Y | CN 108987770 A (SOUTHWEST JIAOTONG UNIVERSITY) 11 December 2018 (2018-12-11) description, paragraphs 6-81, and figures 1-10 | 3, 4, 6, 7 |
| A | JP 2020053288 A (SUBARU CORP.) 02 April 2020 (2020-04-02) entire document | 1-10 |

Form PCT/ISA/210 (second sheet) (January 2015)

## INTERNATIONAL SEARCH REPORT
### Information on patent family members

International application No.

**PCT/CN2021/104419**

| Patent document cited in search report | | | Publication date (day/month/year) | Patent family member(s) | | | Publication date (day/month/year) |
|---|---|---|---|---|---|---|---|
| CN | 112366678 | A | 12 February 2021 | None | | | |
| CN | 108987770 | A | 11 December 2018 | CN | 108987770 | B | 06 November 2020 |
| JP | 2020053288 | A | 02 April 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011270368